# EUROPEAN PATENT APPLICATION

(11) **EP 4 507 381 A1**
(43) Date of publication of application: **12.02.2025**
(21) Application number: 24192726.8
(22) Date of filing: 02.08.2024
(51) Int. Cl.: H04W 36/00, H04W 36/36

(54) **CONDITIONAL CELL CHANGE**

(30) Priority: 10.08.2023 IN 202341053791
(71) Applicant: Nokia Technologies Oy, 02610 Espoo (FI)
(72) Inventor: SPAPIS, Panagiotis, Munich (DE); KARABULUT, Umur, Munich (DE); SELVAGANAPATHY, Srinivasan, Bangalore (IN); DOSTI, Endrit, Espoo (FI)
(74) Representative: Nokia EPO representatives

(57) **Abstract**

Example embodiments of the present disclosure relate to devices, methods, apparatuses and computer readable storage medium for conditional cell changes. In a method, a network device transmits, to a plurality of candidate target network devices, an indication of a plurality of candidate target cells of the plurality of candidate target network device. The network device receives, from the plurality of candidate target network devices, first information related to measurements for changes between the plurality of candidate target cells. Then the network device transmits, to a terminal device, second information related to the measurements for use in executing of the change from a first candidate target cell to a second candidate target cell among the plurality of candidate target cells after handover from a source cell to the first candidate target cell.

## Description

### FIELDS

Various example embodiments of the present disclosure generally relate to the field of telecommunication and in particular, to devices, methods, apparatuses and computer readable storage medium for conditional cell changes.

### BACKGROUND

The serving and the target cell radio resource configurations are provided to the UE using Radio Resource Control (RRC) protocol. In selective activation, a UE is enabled to maintain target cell configurations for Primary Secondary Cell (PSCell) change upon the Conditional Primary Secondary Cell Change (CPC) and to continue evaluating for subsequent changes. For conditional execution, report configurations and measurement ID needed are generated by a source secondary node (SN) which triggers the conditional configuration. In a case where the UE hands over from one target SN to the other target SN, the target SN is not aware of other SN, resulting in the UE having no report configurations and measurement ID for the other target SN cell configurations.

### SUMMARY

In a first aspect of the present disclosure, there is provided a network device. The network device comprises at least one processor; and at least one memory storing instructions that, when executed by the at least one processor, cause the network device at least to: transmit, to a plurality of candidate target network devices, an indication of a plurality of candidate target cells of the plurality of candidate target network devices; receive, from the plurality of candidate target network devices, first information related to measurements for changes between the plurality of candidate target cells; and transmit, to a terminal device, second information related to the measurements for use in executing of the change from a first candidate target cell to a second candidate target cell among the plurality of candidate target cells after handover from a source cell to the first candidate target cell.

In a second aspect of the present disclosure, there is provided a terminal device. The terminal device comprises at least one processor; and at least one memory storing instructions that, when executed by the at least one processor, cause the terminal device at least to: receive, from a network device, second information related to measurements for changes between a plurality of candidate target cells of a plurality of candidate target network devices; and perform, based on the second information, a measurement for the change from a first candidate target cell to a second candidate target cell among the plurality of candidate target cells after handover from a source cell to the first candidate target cell.

In a third aspect of the present disclosure, there is provided a candidate target network device. The candidate target network device comprises at least one processor; and at least one memory storing instructions that, when executed by the at least one processor, cause the candidate target network device at least to: receive, from a network device, an indication of a plurality of candidate target cells of the candidate target network device and at least a further candidate target network device; and transmit, to the network device, first information related to measurements for changes between the plurality of candidate target cells.

In a fourth aspect of the present disclosure, there is provided a method. The method comprises: transmitting, to a plurality of candidate target network devices, an indication of a plurality of candidate target cells of the plurality of candidate target network devices; receiving, from the plurality of candidate target network devices, first information related to measurements for changes between the plurality of candidate target cells; and transmitting, to a terminal device, second information related to the measurements for use in executing of the change from a first candidate target cell to a second candidate target cell of the plurality among candidate target cells after handover from a source cell to the first candidate target cell.

In a fifth aspect of the present disclosure, there is provided a method. The method comprises: receiving, from a network device, second information related to measurements for changes between a plurality of candidate target cells of a plurality of candidate target network devices; and performing, based on the second information, a measurement for the change from a first candidate target cell to a second candidate target cell among the plurality of candidate target cells after handover from a source cell to the first candidate target cell.

In a sixth aspect of the present disclosure, there is provided a method. The method comprises: receiving, from a network device, an indication of a plurality of candidate target cells of the candidate target network device and at least a further candidate target network device; and transmitting, to the network device, first information related to measurements for changes between the plurality of candidate target cells.

In a seventh aspect of the present disclosure, there is provided a first apparatus. The first apparatus comprises means for transmitting, to a plurality of candidate target network devices, an indication of a plurality of candidate target cells of the plurality of candidate target network devices; means for receiving, from the plurality of candidate target network devices, first information related to measurements for changes between the plurality of candidate target cells; and means for transmitting, to a terminal device, second information related to the measurements for use in executing of the change from a first candidate target cell to a second candidate target cell among the plurality of candidate target cells after handover from a source cell to the first candidate target cell.

In an eighth aspect of the present disclosure, there is provided a second apparatus. The second apparatus comprises means for receiving, from a network device, second information related to measurements for changes between a plurality of candidate target cells of a plurality of candidate target network devices; and means for performing, based on the second information, a measurement for the change from a first candidate target cell to a second candidate target cell among the plurality of candidate target cells after handover from a source cell to the first candidate target cell.

In a ninth aspect of the present disclosure, there is provided a third apparatus. The third apparatus comprises means for receiving, from a network device, an indication of a plurality of candidate target cells of the candidate target network device and at least a further candidate target network device; and means for transmitting, to the network device, first information related to measurements for changes between the plurality of candidate target cells.

In a tenth aspect of the present disclosure, there is provided a computer readable medium. The computer readable medium comprises instructions stored thereon for causing an apparatus to perform at least the method according to the fourth, fifth or sixth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1A illustrates an example structure of an RRC message;
FIG. 1B and FIG. 1C illustrate example flowcharts of SN initiated CPC without MN involvement and with MN involvement;
FIG. 2 illustrates an example communication environment in which example embodiments of the present disclosure can be implemented;
FIG. 3 shows a signaling diagram for an example communication process in accordance with some example embodiments of the present disclosure;
FIG. 4 shows a flowchart of an example process in accordance with some example embodiments of the present disclosure;
FIG. 5 illustrates a flowchart of a method implemented at a network device according to some example embodiments of the present disclosure;
FIG. 6 illustrates a flowchart of a method implemented at a terminal device according to some example embodiments of the present disclosure;
FIG. 7 illustrates a flowchart of a method implemented at a candidate target network device according to some example embodiments of the present disclosure;
FIG. 8 illustrates a simplified block diagram of a device that is suitable for implementing example embodiments of the present disclosure; and
FIG. 9 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As described above, the serving and the target cell radio resource configurations are provided to the UE using RRC protocol. The RRC message sent to the UE is the RRC reconfiguration message which contains the configuration of the serving cell (for example, a bandwidth part (BWP), security keys, Beam Configurations, Beam Failure handling configurations, and/or the like). In addition, in a case of mobility configuration, the message contains the measurement configuration of the target cell(s), in order to enable the UE once it performs a cell change to have all the required fields to connect to that cell. The previous statement stands both for a baseline handover command and for a conditional cell change (both Conditional Handover (CHO) and Conditional Primary Secondary Cell Addition Change (CPAC)) including Selective Activation or Selective Activation for PSCell-change (SA/SAPC) which is introduced in the third-generation partnership project (3GPP) Release-18.

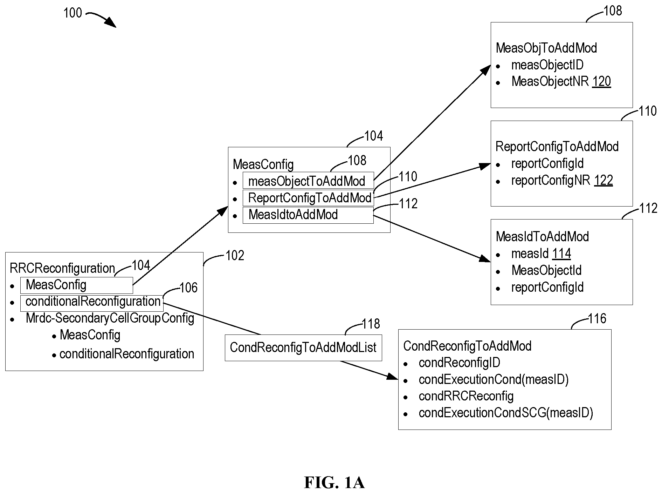

FIG. 1A illustrates an example structure 100 of an RRC message. A descriptive representation of how the target cell configuration is provided to the UE and is linked to the reporting configuration and the measurement configuration is provided.

As shown in FIG. 1A, RRC reconfiguration 102 contains (among other information element (IE)s) a MeasConfig IE 104 and a conditionalReconfiguration IE 106. The former is practically the configuration of the measurements (for example, MeasObjtoAddMod IE 108), the configuration of the Measurement Events (for example, ReportConfigToAddMod IE 110), and their combination in the MeasIdtoAddMod IE 112 with an RRC Configuration of a Target Cell (for example, using the measId IE 114). The measId IE 114 is also part of the CondReconfigToAddMod 116 (which is part of the CondReconfigToAddModList IE 118, which in turn is part of the conditionalReconfiguration IE 106 in the RRC Reconfiguration 102).

Herein, the measObjectNR IE 120 is used to tell the UE which reference signals (RSs) to be measured on which frequencies, and which cell-individual-offsets (CIOs) to be used for evaluation of any condition. The ReportConfigNR 122 specifies the type of the condition to be evaluated by the UE, for example, the events A3, A4,A5 and so on along with the hysteresis, Time-To-Trigger, and event offset values that are used to evaluate the execution conditions. It also specifies whether the event is used for reporting or execution purposes. In the condreconfigToAddMod IE 116, the network provides a conditional reconfiguration to the UE, for example, an RRC Reconfiguration inside the RRC reconfiguration (that is, configurations of target cells executed by the UE). This configuration comes with a measurement ID. The measID IE 114 is mapped to the reportConfigNR IE 122 and MeasObjectNR IE 120 via measIDtoAddMod IE 112 so that the UE will associate the conditional reconfiguration with the right condition and knows what to measure for evaluation of the condition.

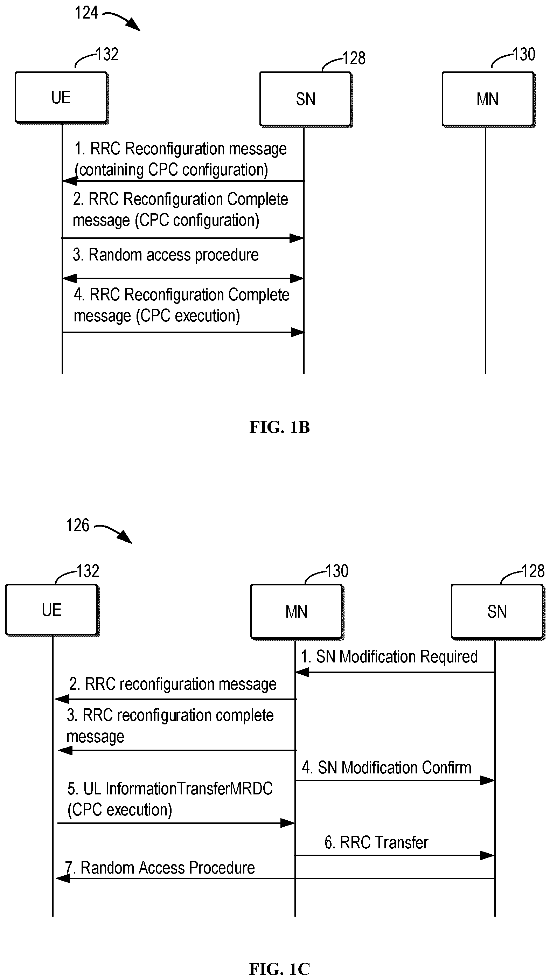

As shown, FIG. 1A is related to the Conditional Handover (CHO) and the SN initiated CPC without master node (MN) involvement (that is, using SRB3). FIG. 1B illustrates signaling diagrams of an example processes 124 of secondary node (SN) initiated CPC without MN involvement while FIG. 1C illustrates signaling diagrams of an example processes 126 of SN initiated CPC with MN involvement. As shown in FIG. 1B, the whole process of CPC initiation by an SN 128 has no involvement of the MN. As shown in FIG. 1C, in a case of SN initiated CPC with MN involvement, the SN 128 may provide the RRC configuration to an MN 130. The MN 130 may include it in the Mrdc-SecondaryCellGroupConfig IE of the RRC configuration provided to a UE 132, to indicate that this is configuration relevant to a PSCell change. The Mrdc-SecondaryCellGroupConfig IE contains a nested RRC configuration for CPC.

In a selective activation scenario, the UE is enabled to maintain the target cell configurations for PSCell change upon the CPC and to continue evaluating for subsequent changes. In a process of SN initiated inter-SN SAPC, the UE has active dual connectivity with the MN and a cell (for example, PSCell) from an SN (denoted as SN1). Then, the UE provides measurement report to the SN1, and the SN1 decides to start inter-SN SAPC with cells (to be configured as PSCells) from other two SNs (denoted by SN2 and SN3). The SN1 sends an SN change required message which provides a candidate PSCell list, and conditions for accessing the PSCells. The report configurations and measurement ID needed for the conditional execution is generated by the source SN (SN1) which triggers the conditional configuration.

Further, the MN sends an SN addition request to the target SNs asking for the RRC configuration of the candidate PSCells and the target SNs provide these in the SN addition request acknowledge. The MN creates the RRC reconfiguration message by combining the target cell configurations with the conditions for accessing the PSCells from the source SN (that is, the SN1). The MN performs an RRC reconfiguration preparation. Then, the MN provides the RRC reconfiguration to the UE who responds with an RRC reconfiguration complete message, and the MN further informs it to the SN1. The UE evaluates the SAPC condition and once it is fulfilled for a cell, the UE informs the MN using an RRC Reconfiguration Complete message. The UE maintains the target PSCells configurations since they are configured for selective activation. Further, the UE accesses the target cell and evaluates the condition for consecutive cell change.

It is to be noted that, the report configurations and measurement ID needed for conditional execution are generated by the source SN which triggers the conditional configuration. Herein, the "source" refers to the serving SN at the time of CPAC execution. The candidate PScell configuration is generated by the target node (that is, target SNs).

In SAPC, when the SN1 is a serving SN, it initiates the preparation of SN2 and SN3 PSCells. When the UE hands over to the SN2, the SN3 preparations remain. For the UE hands over from the SN2 to the SN3, the UE needs to have been configured with proper measurement, reported configurations in advance based on SN2. However, currently, the target SN2 is not aware of all the other potential targets and it does not provide any SCPAC configurations for the SN3. Thus, upon the first execution, the UE has no report configurations and measurement ID for the other target SN cell configurations.

Example embodiments of the present disclosure propose a configuration maintenance scheme. With this scheme, information related to measurements for changes between candidate target cells involved in a handover from a source cell can be transmitted to a terminal among from the corresponding candidate target network devices via a certain network device (such as an MN). Thus, the terminal device can have the configurations that can be used for a further cell change from a candidate target cell (referred to as a first candidate target cell) to another candidate target cell (referred to a second candidate target cell) after handover from a source cell to the first candidate target cell. In this way, the cell change may be implemented in a more efficient way, and the network performance may be improved.

It is to be noted that although the issue is originating from the SAPC scenario, the proposed scheme herein may be applied in general for a Master Cell group (MCG) selective activation scenario and other selective activation scenarios. In the following, some example embodiments will be described using the SAPC scenario as an example while the example embodiments herein can be applied in general for other selective activation scenarios.

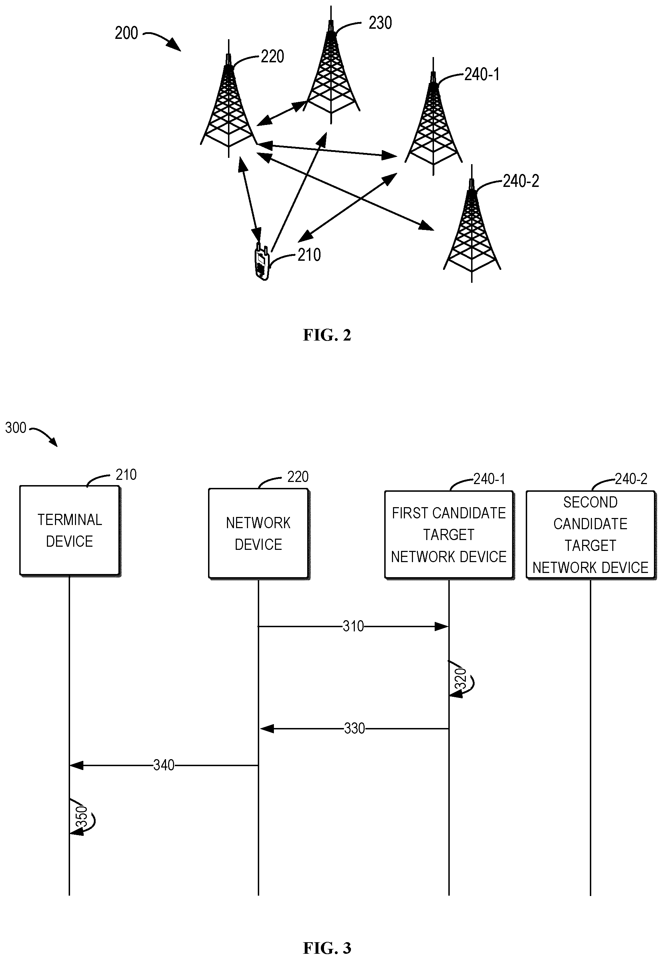

FIG. 2 illustrates an example communication environment 200 in which example embodiments of the present disclosure can be implemented.

The communication environment 200 comprises a terminal device 210 and four network devices which may include a network device 220, a source network device 230 and a plurality of candidate target network devices including a first candidate target network device 240-1 and a second candidate target network device 240-2. In some example embodiments, in Secondary Cell group (SCG) selective activation, the network device 220 may operate as a MN, the source network device 230 may operate as a source SN, and the candidate target network devices 240-1 and 240-2 may operate as target SNs (also called T-SNs). In MCG selective activation, the network device 220 may operate as a source MN, and other network devices may operate as target MNs.

It is to be understood that the number and types of devices are shown in FIG. 1 for the purpose of illustration without suggesting any limitation. For example, the communication environment 100 may comprise any numbers of candidate target network devices. For the purpose of discussion, the candidate target network devices will be individually or collectively referred to as candidate target network device(s) 240.

In some example embodiments, a link from the network device 220 to the terminal device 210 is referred to as a downlink (DL), and a link from the terminal device 210 to the network device 220 is referred to as an uplink (UL). In DL, the network device 220 is a transmitting (TX) device (or a transmitter) and the terminal device 210 is a receiving (RX) device (or a receiver). In UL, the terminal device 210 is a TX device (or a transmitter) and the network device 220 is a RX device (or a receiver).

The terminal device 210 and the network devices 220, 230 and 240 can communicate with each other. Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In the communication environment 100, the network device 220 may inform all the candidate target network devices 240 about the potential target cells (i.e., PSCells of other T-SNs). Each candidate target network device 240 generates information (referred to as first information) related to measurements for changes between the potential target cells (including both Intra and Inter SN cell changes). The network device 220 generates second information indicating a final configuration for each candidate target network device 240 (e.g., including 'condReconfigId Vs MeasId') based on the received first information from the candidate target network devices 240. Then, the network device 220 transmits the second information to the terminal device 210.

FIG. 3 shows a signaling diagram for an example communication process 300 among the terminal device 210, the network device 220 and the candidate target network devices 240 according to some example embodiments of the present disclosure. In the following, the operations and actions at the candidate target network devices 240 will be described by taking the first candidate target network devices 240-1 as an example. It is to be understood that these operations and actions can also be implemented at the second candidate target network devices 240-2.

As shown in FIG. 3, the network device 220 transmits (310), to a plurality of candidate target network devices 240 including the first candidate target network devices 240-1 and the second candidate target network devices 240-2, an indication of a plurality of candidate target cells of the plurality of candidate target network devices. For example, the network device 220 may inform the candidate target network devices 240 about the potential target cells (for example, PSCells of other T-SNs).

Correspondingly, the first candidate target device 240-1 receives, from the network device 220, an indication of a plurality of candidate target cells of the first candidate target network device 240-1 and at least the second candidate target network device 240-2. In some example embodiments, the first candidate target network device 240-1 determines (320) first information related to measurements for changes between the plurality of candidate target cells of the first candidate target network device 240-1 and at least the second candidate target network device 240-2.

In some example embodiments, the first information may include configurations related to the measurements and/or identifications (IDs) of the measurements (also called measurement IDs). For example, in the SAPC scenario, the first candidate target network device 240-1 (operating as a target SN providing one or more PSCells) may generate measurement configurations and measurement IDs for handovers from its prepared PSCells to other prepared PSCells (for example, PSCells of the candidate target network device 240-2) during preparation for all potential candidate cells suggested from a source SN.

In some example embodiments, the changes between the plurality of candidate target cells may comprise: changes between a first list of candidate target cells of a first candidate target network device of the plurality of candidate target network devices and/or changes from the first list of candidate target cells to a second list of candidate target cells of a second candidate target network device (also referred to as a further candidate target network device) of the plurality of candidate target network devices. In an example, the changes comprise both intra-SN and inter-SN cell changes for each target SN. The intra-SN cell change refers to the handovers between T-SN preparations. For example, if PScell-A and PSCell-B are prepared and controlled by the same T-SN, or if the UE handovers to PScell-A, later on, the handover from PSCell-A to PSCell-B will be intra-SN CPAC.

Then, the first candidate target network device 240-1 transmits (330) the first information to the network device 220. Correspondingly, the network device 220 receives, from the plurality of candidate target network devices 240 including the first candidate target network devices 240-1 and the second candidate target network devices 240-2, first information related to measurements for changes between the plurality of candidate target cells.

After that, the network device 220 transmits (340), to the terminal device 210, second information related to the measurements for the changes between the plurality of candidate target cells. For example, the network device 220 may generate the final configurations for each candidate target network devices 240 including 'condReconfigId Vs MeasId' based on the received mapping and final list of prepared candidate cells. The final configuration may be indicated by the third information. In some example embodiments, the third information may contain the second information.

Correspondingly, the terminal device 210 receives, from the network device 220, the second information related to measurements for changes between a plurality of candidate target cells of the plurality of candidate target network devices 240. Afterwards, the terminal device 210 performs (350), based on the second information, a measurement for a change from a first candidate target cell to a second candidate target cell among the plurality of candidate target cells after handover from a source cell to the first candidate target cell.

In the example embodiments, if the first candidate target network device 240-1 serves the first candidate target cell, the first candidate target network device 240-1 may transmit, to the network device 220, a preparation configuration for handover from the source cell to the first candidate target cell. The preparation configuration is associated with the first information for the change from the first candidate target cell to at least a second candidate target cells of the plurality of candidate target cells. Then, the network device 220 may transmit, to the terminal device 210, the preparation configuration for the handover from the source cell to the first candidate target cell in association with the second information for the change from the first candidate target cell to at least the second candidate target cell. Correspondingly, the terminal device 210 may receive, from the network device, the preparation configuration in association with the mapped second information.

If the network device 220 will inform all candidate target network devices 240 for all possible candidate target cells, it is possible though that (some of) the candidate target network devices 240 (such as the second candidate target network device 240-1) may reject the SN addition request. To further improve the efficiency of cell changes, in some example embodiments, some invalid information of the first information from the candidate target network devices 240 may not be provided to the terminal device 210. This invalid information may include orphan measurement IDs or without the mapped measurement configurations and/or execution conditions, or orphan configurations without the mapped measurement IDs.

In some example embodiments, the network device 220 may determine invalid information from the first information and generate the second information by removing the invalid information from the first information. In an example, for the determination of invalid information, if the network device 220 determines that there is a measurement ID having no corresponding measurement configurations and/or execution conditions, the network device 220 may determine the measurement ID as the invalid information. In an example, the network device 220 may parse the RRC Configuration provided by the candidate target network devices 240 and then consolidate the RRC Reconfiguration message accordingly.

In some example embodiments, the removal of the invalidation information may be implemented by the terminal device 210. In some example embodiments, the terminal device 210 may determine the invalid information and remove it from the second information before performing the measurements. In an example, upon the SAPC execution, the terminal device 210 may identify invalid/orphan pairs of MeasId, CondRRCReconfig and then remove them.

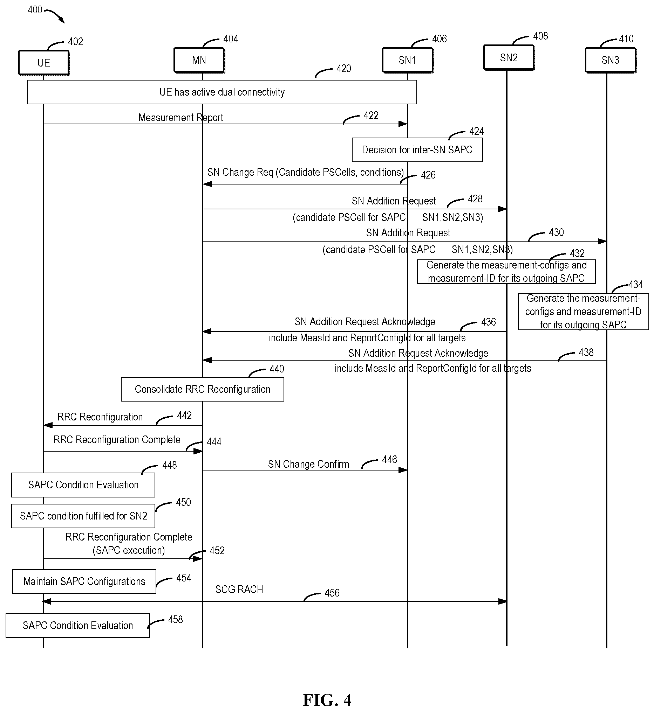

Some example implementations will be described below with reference to FIG. 4.

FIG. 4 shows a flowchart of an example process 400 in accordance with some example embodiments of the present disclosure. In this example, a UE 402 operates as an example implementation of the terminal device 210 in FIG. 2, an MN 404 operates as an example implementation of the network device 220 in FIG. 2, a source SN1 406 operates as an example implementation of the source network device 230, and a target SN2 408 and a target SN3 410 operate as example implementations of the first and second candidate target network devices 240-1 and 240-2.

As shown in FIG. 4, in the process 400, at 420, the UE 402 has active Dual Connectivity with MN 404 and a cell (for example, PSCell) from SN1 406. At 422, the UE 404 provides a measurement report to the SN1 406. At 424, the SN1 406 may decide to prepare inter-SN Selective Activation for PSCell-change (SAPC) with cells (for example, to be configured as PSCells) from SN2 408 and SN3 410.

At 426, the SN1 406 sends an SN change required message to the MN 404. The SN change required message may provide a candidate PSCell list (for example, for both SN2 408 and SN3 410). The SN change required message may further provide conditions for accessing the PSCells from current serving PSCell to all candidate PSCells. It is to be noted that the report configurations and measurement IDs needed for a conditional execution is generated by the node which triggers the conditional configuration (that is, the source SN). Herein, the measurement configurations, the conditions and the measurement IDs of the first PSCell change from the SN1 406 to the SN2 408 and the SN1 406 to the SN3 PSCells will be provided by the SN1 406. However, the subsequent SCPAC configurations from SN2 PSCells to SN1 406 and SN3 PSCells as well as the SN3 PSCells to the SN1 406 and SN2 PSCells may not be provided by the SN1 406 (as it is SN2 408 and the SN3 410 responsibility).

At 428 and 430, the MN 404 sends an SN addition request to the target SNs (for example, the SN2 408 and the SN3 410) asking for the RRC configuration of the candidate PSCells of contacted SN. In additional, the SN addition request may provide the candidate PSCells from other SNs. For example, the SN2 408 may receive the list of PSCells of the SN3 410 in addition to SN2 PSCells, the SN3 410 may receive the list of PSCells of the SN2 408 in addition to SN3 PSCells.

At 432 and 434, the target SNs may create the RRC Configurations for the PSCells under their responsibility and the measurement configurations and measurement ID for its PSCell changes during preparation for all potential candidate-cells (for example, both intra-SN and inter-SN for each target SN) suggested from a source SN. For example, the SN2 408 may create measurement configurations and conditions for PSCell changes between the PSCells of the SN2 408 that are prepared. The SN2 may further create the measurement configurations and conditions for the PSCell changes from the prepared SN2 PSCells to SN3 PSCells that are additionally informed to the SN2 408. In another example, the SN3 410 may create measurement configurations and conditions for PSCell changes between the PSCells of the SN3 410 that are prepared. The SN3 410 may further create the measurement configurations and conditions for the PSCell changes from the prepared SN3 PSCells to SN2 PSCells that are additionally informed to the SN3 410. In the other example, the SN2 408 and the SN3 410 may generate the measID mapping for each configuration that provided to the MN 404, that is, measIDtoAddMod for mapping the reportconfig, measobject and condreconfig via measID to each other.

At 436 and 438, the target SNs in the SN addition request acknowledge may provide the RRC configurations for the PSCells under their responsibility and the measurement configurations and measurement ID for its PSCell changes during preparation for all potential candidate-cells (for example, both intra-SN and inter-SN for each target SN) suggested from the source SN that have been created at 432 and 434.

At 440, the MN 404 creates the RRC reconfiguration message by combining the target cell configurations with the conditions for accessing the PSCells from the source SN (that is, the SN1 406).

At 442, the MN 404 provides the RRC reconfiguration to the UE 402. At 444, the UE 402 may respond with an RRC reconfiguration complete message. At 446, the MN 404 may further inform the SN1 406 about the completion of the SCPAC preparation configuration of the UE 402.

At 448, the UE 402 evaluates the SCPAC condition. At 450, if the SCPAC condition is fulfilled for a cell (for example, the SN2 408), the UE 402 applies the SCPAC configuration that relates to the cell that met the condition, and at 452, the UE 402 informs the MN 404 with an RRC reconfiguration complete message.

At 454, the UE 402 maintains unused target PSCells configurations, for example, all other SCPAC configurations, since they are configured for selective activation.

At 456, the UE 402 accesses the target cell through a secondary cell group (SCG) random access channel (RACH) and at 456 evaluates the condition for consecutive cell change same as 446 but using the new measurement configurations and the conditions for the retained SCPAC configurations, which is known to the UE after the execution of the SCPAC configuration as each SCPAC configuration consolidated by the MN 404 provides the new configurations and conditions for the subsequent cell changes. Aside from the config change, the 448 onwards may be repeated by the UE 402 and the UE handovers between the SCPAC cells that are prepared without re-initiation of the configurations or reconfigurations.

In some example embodiments, the message exchange procedures are the same with FIG. 4, a difference is made to the aforementioned 436 and 438. In this example, at 436 and 438, each T-SN provides the configurations in IEs that are readable from the MN 404 instead of in transparent containers. Some other differences are made to the aforementioned 440. In this example, at 440, the MN 404 may parse the RRC configurations provided by the each TSN, and may check for invalid/orphan pairs of MeasId, CondRRCReconfig and remove them. The MN 404 may create a clean RRC Reconfig, a conditionalReconfig per prepared PSCell for SCPAC that includes the parsed and re-organized measurement, and condition configurations for subsequent cell change. Then, the MN 404 may provide each conditionalReconfig to the UE 402. In this way, the orphan measurement ID problem is mitigated through the MN parsing the RRC configuration provided by the target SN and consolidating the RRC reconfiguration message accordingly.

Alternatively, the target SNs only provide necessary configurations in non-transparent containers to the MN 404. In this way, the MN 404 is enabled to consolidate the RRC configuration without requiring all the SN configuration to be in the non-transparent container.

In some example embodiments, the message exchange procedures are the same with FIG. 4, a difference is made to the aforementioned 454. In this example, at 454, upon the access of the target cell, the UE 402 may identify the orphan pairs of MeasId, CondRRCReconfig and remove them. Instead of continuing to performing measurements, the UE 402 may update the RRC configuration and remove them. In this way, the UE 402 not only may stop performing evaluation of the condition to change cell but may stop performing measurements since the UE 402 updates the measurement configuration. In this way, the orphan measurement ID problem is mitigated through the UE 402 identifying the orphan configurations and removing them upon the SAPC execution.

### Example Methods

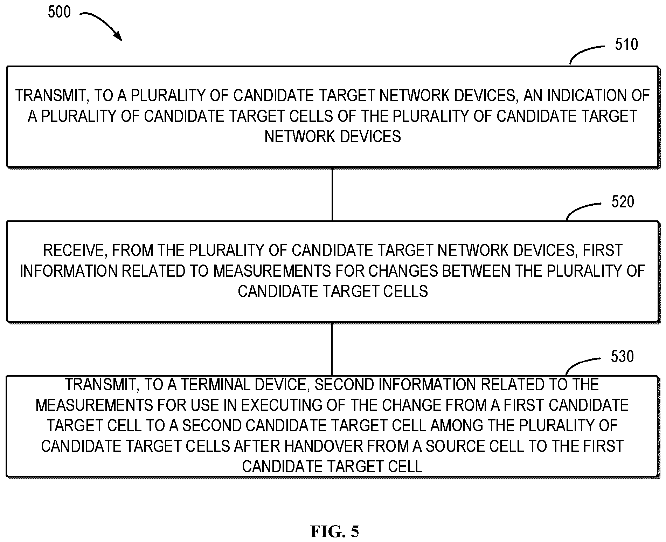

FIG. 5 shows a flowchart of an example method 500 implemented at the network device 220 in accordance with some example embodiments of the present disclosure. For the purpose of discussion, the method 500 will be described from the perspective of the network device 220 in FIG. 2.

At block 510, the network device 220 transmits, to a plurality of candidate target network devices, an indication of a plurality of candidate target cells of the plurality of candidate target network devices.

At block 520, the network device 220 receives, from the plurality of candidate target network devices, first information related to measurements for changes between the plurality of candidate target cells.

At block 530, the network device 220 transmits, to a terminal device, second information related to the measurements for use in executing of the change from a first candidate target cell to a second candidate target cell among the plurality of candidate target cells after handover from a source cell to the first candidate target cell.

In some example embodiments, the first information includes at least one of: configurations related to the measurements, or identifications of the measurements.

In some example embodiments, the second information contains the first information.

In some example embodiments, the network device 220 may determine invalid information from the first information; and generate the second information by removing the invalid information from the first information.

In some example embodiments, the changes between the plurality of candidate target network devices comprise at least one of: changes between a first list of candidate target cells of a first candidate target network device of the plurality of candidate target network devices, or changes from the first list of candidate target cells to a second list of candidate target cells of a second candidate target network device of the plurality of candidate target network devices.

In some example embodiments, the first candidate target network device serves the first candidate target cell. In these example embodiments, the network device 220 may receive, from the first candidate target network device, a preparation configuration for the handover from the source cell to the first candidate target cell. The preparation configuration is associated with the first information for the change from the first candidate target cell to at least the second candidate target cells of the plurality of candidate target cells. Then, the network device 220 may transmit, to the terminal device, the preparation configuration in association with the second information for the change from the first candidate target cell to at least the second candidate target cell among the plurality of candidate target cells.

In some example embodiments, the network device 220 comprises a master node, and the candidate target network device comprises a secondary node.

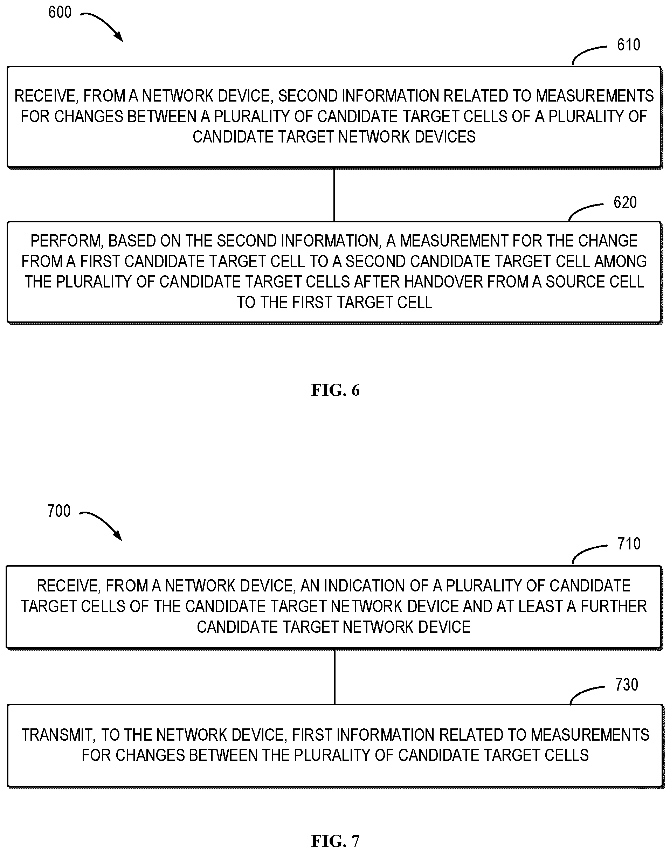

FIG. 6 shows a flowchart of an example method 600 implemented at the terminal device 210 in accordance with some example embodiments of the present disclosure. For the purpose of discussion, the method 600 will be described from the perspective of the terminal device 210 in FIG. 2.

At block 610, the terminal device 210 receives, from a network device, second information related to measurements for changes between a plurality of candidate target cells of a plurality of candidate target network devices.

At block 620, the terminal device 210 performs, based on the second information, a measurement for the change from a first candidate target cell to a second candidate target cell among the plurality of candidate target cells after handover from a source cell to the first candidate target cell.

In some example embodiments, the second information includes at least one of: configurations related to the measurements, or identifications of the measurements.

In some example embodiments, the third information includes the second information.

In some example embodiments, the terminal device 210 may before performing the measurements, remove invalid information from the second information.

In some example embodiments, the changes between the plurality of candidate target network devices comprise at least one of: changes between a first list of candidate target cells of a first candidate target network device of the plurality of candidate target network devices, or changes from the first list of candidate target cells to a second list of candidate target cells of a second candidate target network device of the plurality of candidate target network devices.

In some example embodiments, the first candidate target network device serves the first candidate target cell. In these example embodiments, the terminal device 210 may receive, from the network device, a preparation configuration for the handover from the source cell to the first candidate target cell, in association with the second information for the change from the first candidate target cell to at least the second candidate target cell among the plurality of candidate target cells.

In some example embodiments, the network device comprises a master node, and the candidate target network device comprises a secondary node.

FIG. 7 shows a flowchart of an example method 700 implemented at the candidate target network device 240 in accordance with some example embodiments of the present disclosure. For the purpose of discussion, the method 700 will be described from the perspective of the candidate target network device 240 in FIG. 2.

At block 710, the candidate target network device 240 receives, from a network device, an indication of a plurality of candidate target cells of the candidate target network device and at least a further candidate target network device.

At block 730, the candidate target network device 240 transmits, to the network device, first information related to measurements for changes between the plurality of candidate target cells.

In some example embodiments, the first information includes at least one of: configurations related to the measurements, or identifications of the measurements.

In some example embodiments, the changes between the plurality of candidate target network devices comprise at least one of: changes between a first list of candidate target cells of the candidate target network device, or changes from the first list of candidate target cells to a second list of candidate target cells of the further candidate target network device.

In some example embodiments, the candidate target network device 240 may transmit, to the network device, a preparation configuration for handover from a source cell to a first candidate target cell in the first list of candidate target cells, the preparation configuration being associated with the first information for the change from the first candidate target cell to at least a second candidate target cells of the plurality of candidate target cells.

In some example embodiments, the network device comprises a master node, and the candidate target network device comprises a secondary node.

### Example Apparatus, Device and Medium

In some example embodiments, a first apparatus capable of performing the method 500 (for example, the network device 220 in FIG. 2 may comprise means for performing the respective operations of the method 500. The means may be implemented in any suitable form. For example, the means may be implemented in a circuitry or software module. The first apparatus may be implemented as or included in the network device 220 in FIG. 2.

In some example embodiments, the first apparatus comprises means for transmitting, to a plurality of candidate target network devices, an indication of a plurality of candidate target cells of the plurality of candidate target network devices; means for receiving, from the plurality of candidate target network devices, first information related to measurements for changes between the plurality of candidate target cells; and means for transmitting, to a terminal device, second information related to the measurements for use in executing of the change from a first candidate target cell to a second candidate target cell among the plurality of candidate target cells after handover from a source cell to the first candidate target cell.

In some example embodiments, the first information includes at least one of: configurations related to the measurements, or identifications of the measurements.

In some example embodiments, the second information contains the first information.

In some example embodiments, the first apparatus comprises means for determining invalid information from the first information; and means for generating the second information by removing the invalid information from the first information.

In some example embodiments, the changes between the plurality of candidate target network devices comprise at least one of: changes between a first list of candidate target cells of a first candidate target network device of the plurality of candidate target network devices, or changes from the first list of candidate target cells to a second list of candidate target cells of a second candidate target network device of the plurality of candidate target network devices.

In some example embodiments, the first candidate target network device serves the first candidate target cell, and the first apparatus comprises means for receiving, from the first candidate target network device, a preparation configuration for the handover from the source cell to the first candidate target cell, the preparation configuration being associated with the first information for the change from the first candidate target cell to at least the second candidate target cells of the plurality of candidate target cells; and means for transmitting, to the terminal device, the preparation configuration in association with the second information for the change from the first candidate target cell to at least the second candidate target cell among the plurality of candidate target cells.

In some example embodiments, the network device comprises a master node, and the candidate target network device comprises a secondary node.

In some example embodiments, the first apparatus further comprises means for performing other operations in some example embodiments of the method 500 or the network device 220. In some example embodiments, the means comprises at least one processor; and at least one memory storing instructions that, when executed by the at least one processor, cause the performance of the first apparatus.

In some example embodiments, a second apparatus capable of performing any of the method 600 (for example, the terminal device 210 in FIG. 2 may comprise means for performing the respective operations of the method 600. The means may be implemented in any suitable form. For example, the means may be implemented in a circuitry or software module. The second apparatus may be implemented as or included in the terminal device 210 in FIG. 2.

In some example embodiments, the second apparatus comprises means for receiving, from a network device, second information related to measurements for changes between a plurality of candidate target cells of a plurality of candidate target network devices; and means for performing, based on the second information, a measurement for the change from a first candidate target cell to a second candidate target cell among the plurality of candidate target cells after handover from a source cell to the first candidate target cell.

In some example embodiments, the second information includes at least one of: configurations related to the measurements, or identifications of the measurements.

In some example embodiments, the third information includes the second information.

In some example embodiments, the second apparatus comprises means for before performing the measurements, removing invalid information from the second information.

In some example embodiments, the changes between the plurality of candidate target network devices comprise at least one of: changes between a first list of candidate target cells of a first candidate target network device of the plurality of candidate target network devices, or changes from the first list of candidate target cells to a second list of candidate target cells of a second candidate target network device of the plurality of candidate target network devices.

In some example embodiments, the first candidate target network device serves the first candidate target cell, and the second apparatus comprises means for receiving, from the network device, a preparation configuration for the handover from the source cell to the first candidate target cell, in association with the second information for the change from the first candidate target cell to at least the second candidate target cell among the plurality of candidate target cells.

In some example embodiments, the network device comprises a master node, and the candidate target network device comprises a secondary node.

In some example embodiments, the second apparatus further comprises means for performing other operations in some example embodiments of the method 600 or the terminal device 210. In some example embodiments, the means comprises at least one processor; and at least one memory storing instructions that, when executed by the at least one processor, cause the performance of the second apparatus.

In some example embodiments, a third apparatus capable of performing any of the method 700 (for example, the candidate target network device 240 in FIG. 2 may comprise means for performing the respective operations of the method 700. The means may be implemented in any suitable form. For example, the means may be implemented in a circuitry or software module. The third apparatus may be implemented as or included in the candidate target network device 240 in FIG. 2.

In some example embodiments, the third apparatus comprises means for receiving, from a network device, an indication of a plurality of candidate target cells of the candidate target network device and at least a further candidate target network device; and means for transmitting, to the network device, first information related to measurements for changes between the plurality of candidate target cells.

In some example embodiments, the first information includes at least one of: configurations related to the measurements, or identifications of the measurements.

In some example embodiments, the changes between the plurality of candidate target network devices comprise at least one of: changes between a first list of candidate target cells of the candidate target network device, or changes from the first list of candidate target cells to a second list of candidate target cells of the further candidate target network device.

In some example embodiments, the third apparatus comprises means for transmitting, to the network device, a preparation configuration for handover from a source cell to a first candidate target cell in the first list of candidate target cells, the preparation configuration being associated with the first information for the change from the first candidate target cell to at least a second candidate target cells of the plurality of candidate target cells.

In some example embodiments, the network device comprises a master node, and the candidate target network device comprises a secondary node.

In some example embodiments, the third apparatus further comprises means for performing other operations in some example embodiments of the method 700 or the candidate target network device 240. In some example embodiments, the means comprises at least one processor; and at least one memory storing instructions that, when executed by the at least one processor, cause the performance of the third apparatus.

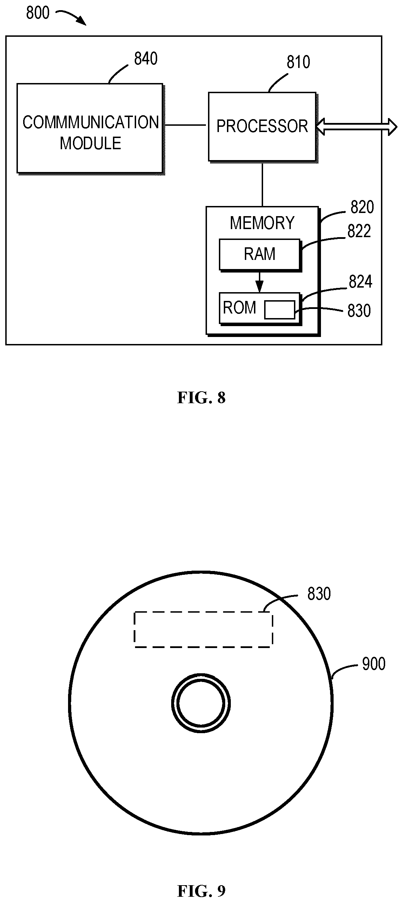

FIG. 8 is a simplified block diagram of a device 800 that is suitable for implementing example embodiments of the present disclosure. The device 800 may be provided to implement a communication device, for example, the terminal device 210, the network device 220 or the candidate target network device 240 as shown in FIG. 2. As shown, the device 800 includes one or more processors 810, one or more memories 820 coupled to the processor 810, and one or more communication modules 840 coupled to the processor 810.

The communication module 840 is for bidirectional communications. The communication module 840 has one or more communication interfaces to facilitate communication with one or more other modules or devices. The communication interfaces may represent any interface that is necessary for communication with other network elements. In some example embodiments, the communication module 840 may include at least one antenna.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The instructions of the program 830 may include instructions for performing operations/acts of some example embodiments of the present disclosure. The program 830 may be stored in the memory, e.g., the ROM 824. The processor 810 may perform any suitable actions and processing by loading the program 830 into the RAM 822.

The example embodiments of the present disclosure may be implemented by means of the program 830 so that the device 800 may perform any process of the disclosure as discussed with reference to FIG. 3 to FIG. 7. The example embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 9 shows an example of the computer readable medium 900 which may be in form of CD, DVD or other optical storage disk. The computer readable medium 900 has the program 830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A network device comprising:
at least one processor; and
at least one memory storing instructions that, when executed by the at least one processor, cause the network device at least to:
transmit, to a plurality of candidate target network devices, an indication of a plurality of candidate target cells of the plurality of candidate target network devices;
receive, from the plurality of candidate target network devices, first information related to measurements for changes between the plurality of candidate target cells; and
transmit, to a terminal device, second information related to the measurements for use in executing of the change from a first candidate target cell to a second candidate target cell among the plurality of candidate target cells after handover from a source cell to the first candidate target cell.

2. A terminal device comprising:
at least one processor; and
at least one memory storing instructions that, when executed by the at least one processor, cause the terminal device at least to:
receive, from a network device, second information related to measurements for changes between a plurality of candidate target cells of a plurality of candidate target network devices; and
perform, based on the second information, a measurement for the change from a first candidate target cell to a second candidate target cell among the plurality of candidate target cells after handover from a source cell to the first candidate target cell.

3. The terminal device of claim 2, wherein the second information includes at least one of:
configurations related to the measurements, or
identifications of the measurements.

4. The terminal device of claim 2 or 3, wherein the at least one memory and the at least one processor cause the terminal device to:
before performing the measurements, remove invalid information from the second information.

5. The terminal device of any of claims 2-4, wherein the changes between the plurality of candidate target network devices comprise at least one of:
changes between a first list of candidate target cells of a first candidate target network device of the plurality of candidate target network devices, or
changes from the first list of candidate target cells to a second list of candidate target cells of a second candidate target network device of the plurality of candidate target network devices.

6. The terminal device of claim 5, wherein the first candidate target network device serves the first candidate target cell, and the at least one memory and the at least one processor further cause the terminal device to:
receive, from the network device, a preparation configuration for the handover from the source cell to the first candidate target cell, in association with the second information for the change from the first candidate target cell to at least the second candidate target cell among the plurality of candidate target cells.

7. The terminal device of any of claims 2-6, wherein the network device comprises a master node, and the candidate target network device comprises a secondary node.

8. A candidate target network device comprising:
at least one processor; and
at least one memory storing instructions that, when executed by the at least one processor, cause the candidate target network device at least to:
receive, from a network device, an indication of a plurality of candidate target cells of the candidate target network device and at least a further candidate target network device; and
transmit, to the network device, first information related to measurements for changes between the plurality of candidate target cells.

9. The candidate target network device of claim 8, wherein the first information includes at least one of:
configurations related to the measurements, or
identifications of the measurements.

10. The candidate target network device of claim 8 or 9, wherein the changes between the plurality of candidate target network devices comprise at least one of:
changes between a first list of candidate target cells of the candidate target network device, or
changes from the first list of candidate target cells to a second list of candidate target cells of the further candidate target network device.

11. The candidate target network device of claim 10, wherein the at least one memory and the at least one processor cause the candidate target network device to:
transmit, to the network device, a preparation configuration for handover from a source cell to a first candidate target cell in the first list of candidate target cells, the preparation configuration being associated with the first information for the change from the first candidate target cell to at least a second candidate target cells of the plurality of candidate target cells.

12. The candidate target network device of any of claims 8-11, wherein the network device comprises a master node, and the candidate target network device comprises a secondary node.

13. A method comprising:
transmitting, to a plurality of candidate target network devices, an indication of a plurality of candidate target cells of the plurality of candidate target network devices;
receiving, from the plurality of candidate target network devices, first information related to measurements for changes between the plurality of candidate target cells; and
transmitting, to a terminal device, second information related to the measurements for use in executing of the change from a first candidate target cell to a second candidate target cell among the plurality of candidate target cells after handover from a source cell to the first candidate target cell.

14. A method comprising:
receiving, from a network device, second information related to measurements for changes between a plurality of candidate target cells of a plurality of candidate target network devices; and
performing, based on the second information, a measurement for the change from a first candidate target cell to a second candidate target cell among the plurality of candidate target cells after handover from a source cell to the first candidate target cell.

15. A method comprising:
receiving, from a network device, an indication of a plurality of candidate target cells of the candidate target network device and at least a further candidate target network device; and
transmitting, to the network device, first information related to measurements for changes between the plurality of candidate target cells.

16. A computer readable medium comprising instructions stored thereon for causing an apparatus at least to perform the method of claim 13 or the method of claim 14 or the method of claim 15.
